# EUROPÄISCHE PATENTANMELDUNG

(11) **EP 0 694 748 A1**
(43) Veröffentlichungstag der Anmeldung: **31.01.1996**
(21) Anmeldenummer: 95111794.4
(22) Anmeldetag: 27.07.1995
(51) Int. Cl.: F28D 7/08

(54) **Verlegbare Rohranordnung**

(30) Priorität: 30.07.1994 DE 4427147
(71) Anmelder: Hewing GmbH, D-48607 Ochtrup (DE)
(72) Erfinder: Hewing, Bernd, D-48607 Ochtrup (DE)
(74) Vertreter: Hilleringmann, Jochen, Dipl.-Ing.

(57) **Zusammenfassung**

Die verlegbare Rohranordnung dient insbesondere zum Verlegen von für Fußboden-, Wand- und/oder Deckenheizungen und/oder -kühlungen vorgesehenen Rohren. Sie weist mindestens ein Rohranordnungselement (12) auf, das mit mindestens einer Haltevorrichtung (20) versehen ist, die in Haltebereichen (26) eine teilweise geradlinig und/oder teilweise gekrümmt verlaufende Rohrleitung (18) hält. Benachbarte Rohranordnungselemente, die in Richtung des Rohrleitungsverlaufs betrachtet aufeinanderfolgen, weisen miteinander verbundene Haltevorrichtungen (20) auf. Die sich über mehrere Rohranordnungselemente (12) erstreckende Rohrleitung (18) verläuft durchgehend. Die Haltevorrichtungen sind flexibel miteinander verbunden, so daß die Rohranordnungselemente (12) übereinandergeklappt und auseinandergeklappt werden können.

## Beschreibung

Die Erfindung betrifft eine verlegbare Rohranordnung zum Verlegen auf und/oder an einer Verlegefläche, insbesondere für eine Fußboden-, Wand- und/oder Deckenheizung und/oder -kühlung.

Die bisher praktizierte Verlegung von Rohren für insbesondere Fußbodenheizungen gestaltet sich derart, daß die Rohrleitung vorort auf einem wärmegedämmten Untergrund aufgebracht wird. Dies erfolgt entweder mittels Wärmedämm-Noppenplatten, auf denen die Rohrleitung gehalten ist, oder mittels Halteelementen, zumeist in Form von Halteclipsen, die auf bzw. an Wärmedämmplatten mit ebener Oberfläche befestigt werden. Die bisherige Verlegetechnik ist recht mühselig und arbeitszeitaufwendig, da das Rohr vorort einerseits verlegt und gebogen und andererseits befestigt werden muß.

Der Erfindung liegt die Aufgabe zugrunde, die Verlegung von Rohrleitungen für insbesondere Fußboden-, Wand- und/oder Deckenheizungen und/oder -kühlungen durch eine einfach und schnell verlegbare Rohranordnung zu verbessern.

Zur Lösung dieser Aufgabe wird mit der Erfindung eine verlegbare Rohranordnung der eingangs genannten Art vorgeschlagen, die versehen ist mit
- mindestens einem Rohranordnungselement, das aufweist
   - eine in einem Flächenbereich verlaufende Rohrleitung, die mindestens einen geradlinigen Verlaufsabschnitt und/oder einen gekrümmten Verlaufsabschnitt aufweist, und
      mindestens eine Haltevorrichtung zum Halten der Rohrleitung unter Aufrechterhaltung des Rohrleitungsverlaufs innerhalb des Flächenbereichs, wobei die mindestens eine Haltevorrichtung in mindestens einem Haltebereich der Rohrleitung mit dieser in Halteeingriff steht.

Die erfindungsgemäße verlegbare Rohrandordnung besteht aus mindestens einem, vorzugsweise mehreren Rohranordnungselement bzw. Rohranordnungselementen. Jedes Rohranordnungselement weist mindestens eine Haltevorrichtung auf, die die Rohrleitung entlang ihres Verlaufs innerhalb des Rohranordnungselementes in mindestens einem Haltebereich, vorzugsweise in mehreren Haltebereichen hält und den Rohrleitungsverlauf aufrechterhält. Innerhalb eines Rohranordnungselements verläuft die Rohrleitung, die vorzugsweise aus einem insbesondere thermoplastischen Kunststoffmaterial besteht, in mindestens einem Verlaufsabschnitt geradlinig und/oder mindestens in einem Verlaufsabschnitt gekrümmt. Pro Rohranordnungselement ist der Verlauf der Rohrleitung vorzugsweise gleich oder zwei benachbarte Rohranordnungselemente weisen Rohrleitungsverläufe auf, die insbesondere längs der Trennungsachse der beiden benachbarten Rohranordnungselemente symmetrisch zueinander sind. Die Rohrleitung verläuft pro Rohranordnungselement in einer Ebene innerhalb eines Flächenbereichs. Für die Verlegefläche, an bzw. auf der die Rohrleitung verlegt werden soll, werden dann so viele Rohranordnungselemente benötigt, wie Flächenbereiche zum Ausfüllen der Verlegefläche erforderlich sind.

Mit der erfindungsgemäßen verlegbaren Rohranordnung werden Rohranordnungselemente zur Verfügung gestellt, die werksseitig gefertigt sind und innerhalb derer die Rohrleitung einen vorbestimmten Verlauf aufweist. Die zu verlegende Rohrleitung braucht also nicht mehr vorort dem gewünschten Verlauf entsprechend gebogen und angeordnet zu werden; vielmehr reicht es aus, das Rohranordnungselement auf die bzw. an der Verlegefläche aufzulegen bzw. zu befestigen. Damit vereinfacht sich die Montage ganz entscheidend.

Von weitaus entscheidenderer Bedeutung für die Erfindung ist jedoch die Tatsache, daß sich die zu verlegende Rohrleitung über mehrere Rohranordnungselemente erstreckt, die dann im zusammengelegten bzw. zusammengeklappten oder aufgerollten Zustand an den Verlegungsort verbracht und dort ausgebreitet werden. Hierbei sind die Haltevorrichtungen der Rohranordnungselemente flexibel und/oder bereichsweise flexibel oder aber die Haltevorrichtungen benachbarter Rohranordnungselemente sind flexibel miteinander verbunden. Die Haltebereiche, in denen die Rohrleitung von den Haltevorrichtungen gehalten ist, sind derart längs des Rohrleitungsverlaufs angeordnet, daß sich die Rohrleitung beim Aufwickeln des bzw. der Rohranordnungselemente beschädigungsfrei tordieren oder um eine andere als die Längsachse der Rohrleitung biegen lassen. Werden Haltevorrichtungen eingesetzt, die lediglich bereichsweise flexibel sind oder die im wesentlichen biegesteif sind und flexibel untereinander verbunden sind, so sollten die beiden in Richtung des Rohrleitungsverlaufs betrachtet aufeinanderfolgenden Haltebereiche der Haltevorrichtungen zweier benachbarter Rohranordnungselemente derart weit voneinander beabstandet sein, daß das Rohr beim Bewegen der Haltevorrichtungen, insbesondere beim zick-zack-förmigen Zusammenlegen der Haltevorrichtungen im Bereich zwischen den beiden besagten Halteabschnitten beschädigungsfrei tordierbar oder um eine andere als die Längsachse der Rohrleitung biegbar ist.

Eine den obigen Anforderungen genügende verlegbare Rohranordnung mit mehreren Rohranordnungselementen weist eine durchgehende Rohrleitung auf, die bereichsweise von den Haltevorrichtungen der einzelnen Rohranordnungselemente gehalten wird, wobei die Haltevorrichtungen der einzelnen Rohranordnungselemente den Rohrleitungsverlauf flächenbereichsweise aufrechterhalten. Eine solche verlegbare Rohranordnung wird nach Art eines Stapels aus einzelnen Rohranordnungselementen, die übereinanderliegend angeordnet sind und deren Haltevorrichtungen untereinander verbunden sind (die Haltevorrichtungen benachbarter Rohranordnungselemente sind flexibel miteinander verbunden), an den Verlegungsort verbracht, wo die verlegbare Rohranordnung auseinandergeklappt und die einzelnen Rohranordnungselemente auf die bzw. an der Verlegefläche gelegt bzw. befestigt werden. Da sich die Rohrleitung durchgehend entlang sämtlicher Rohranordnungselemente erstreckt, ist die Herstellung einer Verbindung der Rohrleitungsabschnitte benachbarter Rohranordnungselemente nicht erforderlich. Lediglich die Enden der sich über die Rohranordnungselemente erstreckenden Rohrleitung sind mit den Verteilerleitungen für den Zulauf und den Rücklauf zu verbinden.

Was den Verlauf der Rohrleitung innerhalb eines Rohranordnungselementes betrifft, so kann dieser nahezu jede beliebige Form annehmen. Insbesondere kann die Rohrleitung in dem durch ein Rohranordnungselement bestimmten Flächenbereich bifilar oder schlangenlinienförmig bzw. zick-zack-förmig verlaufen. Von Vorteil, was die zuverlässige Rohrleitungshalterung und die Aufrechterhaltung des Rohrleitungsverlauf betrifft, ist es, wenn der Rohrleitungsverlauf innerhalb eines Rohranordnungselementes schlangenlinienförmig (zick-zack-förmig) ist und geradlinige Verlaufsabschnitte sowie diese verbindende gekrümmte Verlaufsabschnitte aufweist. Innerhalb der sich in beiden Richtungen des Rohrleitungsverlaufs an einen geradlinigen Verlaufsabschnitt anschließenden gekrümmten Verlaufsabschnitte erstreckt sich die Rohrleitung zueinander gegensinnig gekrümmt. Innerhalb der geradlinigen Verlaufsabschnitte kann sich die Rohrleitung parallel zueinander erstrecken. Damit verläuft die Rohrleitung in den gekrümmten Abschnitten jeweils um 180° gebogen. Sofern die Rohrleitung in in Rohrleitungsverlauf betrachtet aufeinanderfolgenden geradlinigen Verlaufsabschnitten spitzwinklig zueinander verläuft, sich die Rohrleitung also lediglich bezüglich jedes zweiten geradlinigen Rohrleitungsverlaufs parallel erstreckt, ist sie in den gekrümmten Abschnitten um weniger als 180°, vorzugsweise um 160° bis 175° gebogen.

Bei dem obigen Rohrleitungsverlauf ist es von Vorteil, wenn die Haltevorrichtung eines Rohranordnungselements die Rohrleitung in innerhalb der geradlinigen Verlaufsabschnitte befindlichen Haltebereichen hält. Die Rohrleitung steht damit an zwei einander abgewandten Seiten der Haltevorrichtung über diese über. Je nachdem, welche Breitenerstreckung der Flächenbereich eines Rohrleitungselements aufweist, d.h. je nachdem, um wieviel sich die geradlinigen Verlaufsabschnitte beidseitig der Haltevorrichtung über diese hinaus erstrecken, ist es von Vorteil, eine Haltevorrichtung mit mehreren die Rohrleitung haltenden Halteelementen vorzusehen, wobei die den einzelnen Halteelementen zugeordneten Gruppen von Haltebereichen voneinander beabstandet sind. Bei einem schlangenlinienförmigen bzw. zick-zack-förmigen Rohrleitungsverlauf ist es zweckmäßig, zwei vorzugsweise parallel zueinander ausgerichtete Halteelemente einzusetzen, deren Haltebereiche im Übergangsbereich der geradlinigen Verlaufsabschnitte zu den gekrümmten Verlaufsabschnitten liegen.

Zweckmäßig ist es darüber hinaus, wenn die Haltevorrichtung ein oder mehrere band-, streifen- oder leistenförmige Halteelemente aufweist.

Durch die Wahl der Dicke (Erstreckung rechtwinklig zum Flächenbereich eines Rohrleitungselements) der Haltevorrichtung bzw. des Halteelements und die Ausgestaltung von Halteaufnahmen der Haltevorrichtung bzw. des Halteelements zum Halten der Rohrleitung wird der Abstand der Rohrleitung zur Verlegefläche bestimmt. Zur Beibehaltung dieses Abstandes auch in denjenigen Bereichen des Rohrleitungsverlaufs, in denen die Rohrleitung nicht von einer Haltevorrichtung bzw. einem Halteelement gehalten ist, ist es zweckmäßig, Abstandshalter vorzusehen, die zweckmäßigerweise nach Art von Clipsen an der Rohrleitung angebracht werden.

In vorteilhafter Weiterbildung der Erfindung ist vorgesehen, daß die untereinander verbundenen Halteelemente einer Haltevorrichtung um eine im wesentlichen in der Fläche des Rohrleitungsverlaufs oder parallel dazu liegende Schwenkachse schwenkbar sind. Zweckmäßigerweise wird die Schwenkbarkeit benachbarter Halteelemente über Scharniervorrichtungen, insbesondere über Filmscharniere, erzielt. Die flexible Verbindung benachbarter Halteelemente ist vorzugsweise lösbar ausgebildet, so daß sich die Halteelemente benachbarter Rohranordnungselemente einfach trennen lassen. In diesem Zustand sind die Rohranordnungselemente lediglich noch über die Rohrleitung selbst miteinander verbunden. Wird auch diese getrennt, so ist die vollständige Trennung zwischen zwei benachbarten Rohranordnungselementen erzielt.

Zur beschädigungsfreien Trennung der flexiblen Verbindung zweier benachbarter Halteelemente ist es zweckmäßig, wenn die Verbindung als auftrennbare Fügeverbindung, beispielsweise als Steckverbindung, ausgestaltet ist. Hierbei weist jedes Halteelement ein Verbindungsglied auf, das an dem benachbarten Halteelement verankert wird. Das Verbindungsglied selbst ist vorzugsweise flexibel ausgebildet und biegt sich nach Art eines Filmscharniers.

Vorteilhafterweise ist jedes Halteelement als Halteleiste ausgebildet, die Halteaufnahmen zum Halten der Rohrleitung in den Halteabschnitten aufweist. Bei diesen Halteaufnahmen kann es sich um in eine Seite der Halteleiste eingebrachte querverlaufende Halteausnehmungen handeln, in die die Rohrleitung von oben eingesteckt wird. Die Rohrleitung ist in der Halteausnehmung von der Halteleiste umschlossen und wird somit gehalten.

Bei einer zweiteiligen Ausbildung der Halteleiste, bei der die Trennungsebene parallel zum Rohrleitungsverlauf und mittig durch die Rohrleitung hindurch verläuft, weist jede Halteleistenhälfte bzw. jedes Halteleistenteil einander gegenüberliegende Ausnehmungen auf, wobei jeweils zwei gegenüberliegende Ausnehmungen eine querverlaufende, die Rohrleitung umschließende Haltedurchbrechung bilden. Bei zweiteiliger Halteleiste ist eines der beiden Halteleistenteile mit dem Verbindungsglied zum flexiblen Verbinden benachbarter Halteelemente versehen. Dieses in Erstreckung des Halteleistenteils überstehende Verbindungsglied wird nun vorzugsweise zwischen den beiden Halteleistenteilen des benachbarten Halteelements eingeklemmt gehalten. Ein unbeabsichtigtes Lösen des Verbindungsgliedes aus dem Zwischenraum zwischen den beiden Halteleistenteilen kann durch eine entsprechende Verankerung, insbesondere durch korrespondierende Verankerungsvorsprünge und -vertiefungen an dem Verbindungsglied und mindestens einem der Halteleistenteile verhindert werden.

Die beiden Halteleistenteile sind zweckmäßigerweise untereinander durch Clipverbindungen fest miteinander verbunden.

Wie bereits weiter oben erläutert, läßt sich mit der erfindungsgemäßen verlegbaren Rohranordnung eine, insbesondere schlangenlinienförmig bzw. zick-zack-förmig verlaufende Rohrleitung auf bzw. an einer Verlegefläche verlegen. Je nach der Breitenerstreckung der schlangenlinienförmigen bzw. zick-zack-förmigen Rohranordnung (Abstand zwischen zwei in Rohrverlaufsrichtung betrachtet aufeinanderfolgenden gekrümmten Abschnitten) werden mehrere derartige verlegbare Rohranordnungen nebeneinandergelegt, um die Verlegefläche auszufüllen. Dabei kann es von Vorteil sein, daß die einander zugewandten gekrümmten Verlaufsabschnitte zweier nebeneinanderliegender Rohranordnungselemente ineinandergreifen, die beiden Rohranordnungselemente also miteinander "verzahnt" sind. Damit ein gekrümmter Rohrleitungsverlaufsabschnitt eines Rohranordnungselementes möglichst weit bis in das danebenliegende Rohranordnungselement eintauchen kann, ist es zweckmäßig, daß die Halteelemente Aussparungen zur Aufnahme der gekrümmten Rohrleitungsverlaufsabschnitte eines benachbart angeordneten Rohranordnungselements aufweisen. Durch diese Aussparungen erstrecken sich entweder die gekrümmten Rohrleitungsverlaufsabschnitte oder aber die an diese Verlaufsabschnitte angrenzenden geradlinigen Verlaufsabschnitte (zumindest teilweise). Ist der Überstand, um den die Rohrleitung ein- oder beidseitig über eine Haltevorrichtung übersteht, ausreichend groß, so kann auf die hier erwähnten Aufnahmeaussparungen verzichtet werden, da auch ohne diese eine ausreichend tiefe "Verzahnung" der Rohrleitungsverläufe nebeneinanderliegender Rohranordnungselemente gegeben ist.

Nachfolgend werden anhand der Figuren Ausführungsbeispiele der Erfindung näher erläutert. Im einzelnen zeigen:
- Fig. 1: eine Seitenansicht einer verlegbaren Rohranordnung, deren Rohranordnungselemente zu einem Stapel zusammengeklappt sind,
- Fig. 2: drei in Rohrleitungsverlauf aufeinanderfolgende Rohranordnungselemente der Rohranordnung in verlegtem Zustand, in Draufsicht betrachtet,
- Fig. 3: eine Schnittansicht entlang der Linie III-III der Figur 2,
- Fig. 4: eine Draufsicht auf nebeneinanderliegend angeordneten Rohranordnungselementen zweier benachbarter Rohranordnungen mit ineinandergreifenden krummlinigen Rohrleitungsverlaufsabschnitten,
- Fig. 5: eine perspektivische Darstellung der miteinander verbundenen Haltevorrichtungen zweier in Rohrverlaufsrichtung aufeinanderfolgender Rohranordnungselemente, wobei zur Verdeutlichung des Ineinandergreifens krummliniger Rohrleitungsverlaufsabschnitte benachbarter Rohranordnungselemente im Vordergrund die Haltevorrichtung eines benachbarten Rohranordnungselements dargestellt ist,
- Fig. 6: einen Schnitt entlang der Linie VI-VI durch die Verbindung zweier miteinander verbundener Haltevorrichtungen in ausgeklapptem Zustand der zugehörigen Rohranordnungselemente,
- Fig. 7: einen Schnitt durch die Verbindung der Haltevorrichtungen zweier benachbarter Rohranordnungselemente bei zusammengeklappter Rohranordnung,
- Fig. 8: einen Schnitt durch die Verbindung zweier Haltevorrichtungen gemäß alternativer Ausführungsformen für die Scharnierverbindung und die Rohrleitungshalter,
- Fig. 9: eine Draufsicht auf die Verbindung gemäß Figur 8 im Zustand vor der Zusammenfügung beider Haltevorrichtungen,
- Fig.10: einen Schnitt durch die zusammengefügte Verbindung und
- Fig.11: eine Draufsicht auf zwei nebeneinanderliegenden Rohranordnungen mit ineinandergreifenden krummlinigen Rohrverlaufsabschnitten ihrer Rohranordnungselemente.

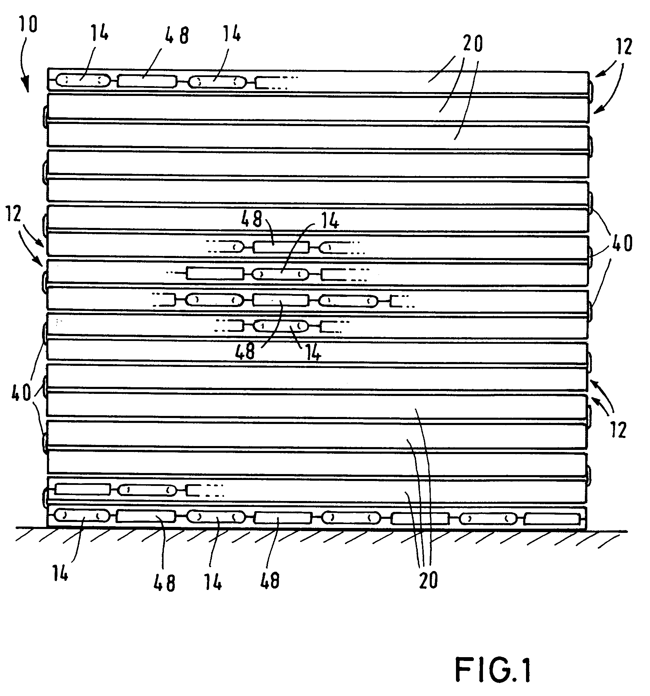

Nachfolgend wird anhand der Figuren 1 bis 3 auf den Aufbau einer verlegbaren Rohranordnung 10 eingegangen, die mehrere untereinander verbundene Rohranordnungselemente 12 und eine durchgehende Rohrleitung 14 aufweist.

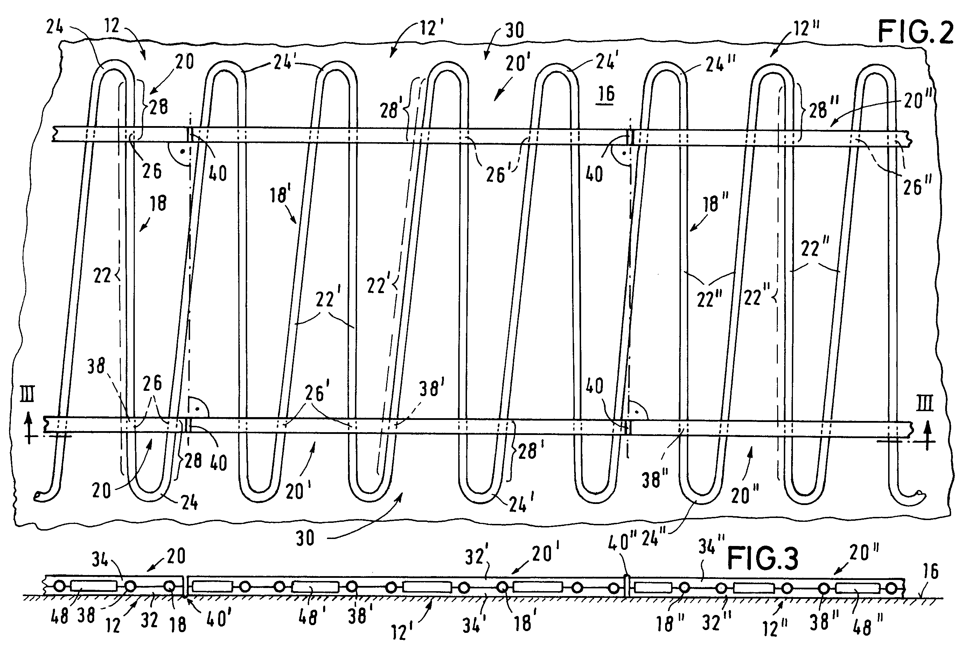

Figur 1 zeigt die einzelnen Rohranordnungselemente in übereinander angeordnetem Stapelzustand, während Figur 2 die auf einer Verlegefläche 16 verlegten in Rohrleitungsverlauf betrachtet aufeinanderfolgenden Rohrleitungselemente 12 in Draufsicht zeigt. In Figur 2 sind die drei aufeinanderfolgenden Rohranordnungselemente mit 12, 12' und 12'' bezeichnet. Die einzelnen Bestandteile der Rohranordnungselemente sind entsprechend ebenfalls mit einfach bzw. doppelt gestrichenen Bezugsziffern gekennzeichnet.

Jedes Rohranordnungselement 12 weist einen schlangenlinienförmigen bzw. zick-zack-förmigen Rohrleitungsverlauf 18 auf, wobei pro Rohranordnungselement 12 zwei leistenförmige Haltevorrichtungen 20 vorgesehen sind, die die Rohrleitung in dem Rohrleitungsabschnitt 18 halten und dessen schlangenlinienförmigen bzw. zick-zack-förmigen Verlauf aufrechterhalten. Wie in Figur 2 zu erkennen ist, setzt sich der Rohrleitungsabschnitt 18 aus geradlinigen Verlaufsabschnitten 22 und gekrümmten Verlaufsabschnitten 24 zusammen. In Richtung des Rohrverlaufs betrachtet aufeinanderfolgende geradlinige Verlaufsabschnitte 22 erstrecken sich in einem Winkel von 5° bis 10° zueinander, während die Rohrleitung in den gekrümmten Verlaufsabschnitten 24 um etwa 160° bis 170° gebogen ist. Die Haltevorrichtungen 20 greifen in Haltebereichen 26 am Rohrleitungsabschnitt 18 an. Diese Haltebereiche 26 befinden sich innerhalb von Angrenzungsabschnitten 28, die an den beidseitigen Enden der geradlinigen Verlaufsabschnitte 22 angeordnet sind und an die gekrümmten Verlaufsabschnitte 24 angrenzen. Die Rohrleitungsabschnitte erstrecken sich also zu den beiden einander abgewandten (Außen-)seiten 30 der Haltevorrichtungen 20 seitlich über diese hinaus; in diesen überstehenden Bereichen setzt sich der Rohrleitungsverlauf im wesentlichen aus den gekrümmten Verlaufsabschnitten 24 und einem Teil der Angrenzungsabschnitte 28 zusammen.

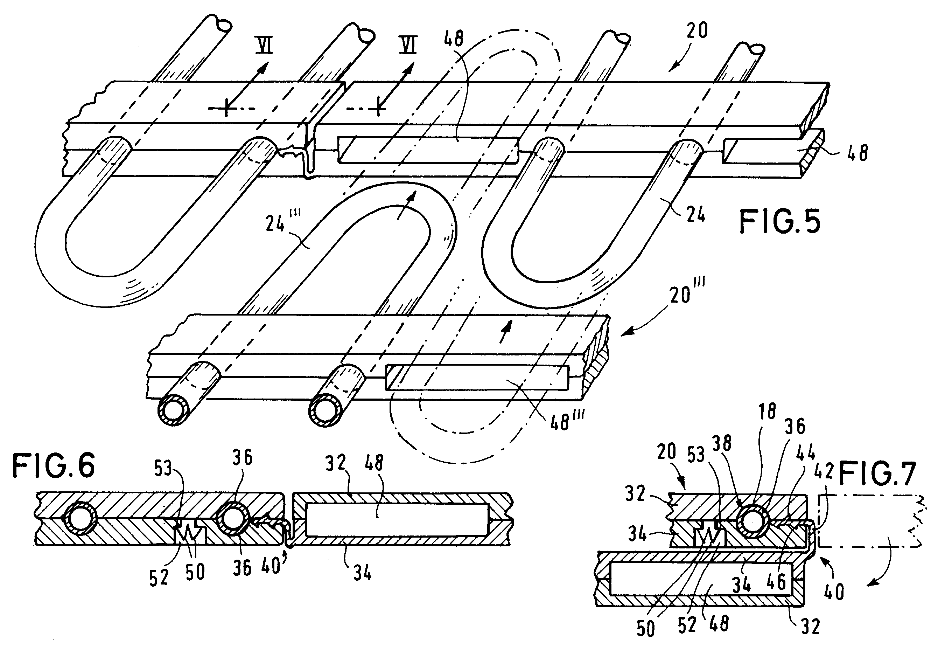

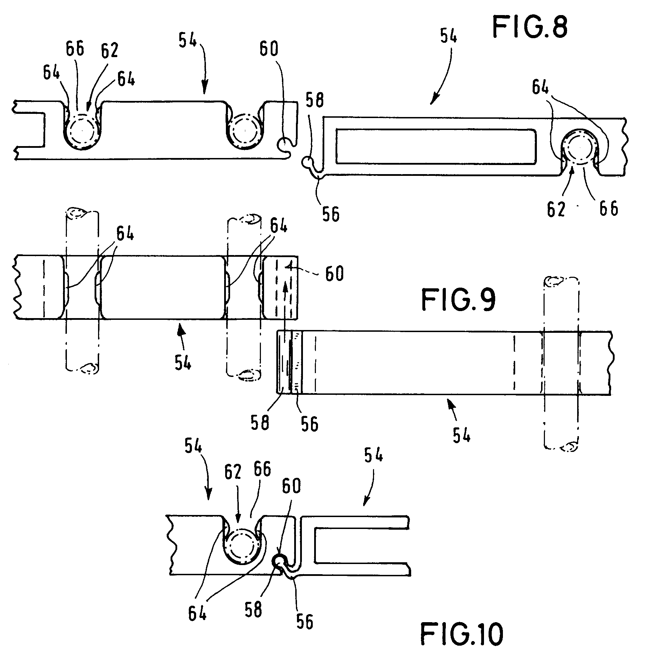

Die Haltevorrichtungen 20' sind als leistenförmige Halteelemente ausgebildet, die aus zwei Halteleistenteilen 32, 34 zusammengesetzt sind. Die beiden Halteleistenteile 32, 34 weisen einander gegenüberliegende halbrunde Vertiefungen 36 auf (s. insbesondere die Fig. 6 und 7), die einander gegenüberliegend in den einander zugewandten Innenseiten der Halteleistenteile 32, 34 ausgebildet sind. Beide Ausnehmungen 36 bilden zusammen eine sich quer durch die Haltevorrichtung 20 hindurch erstreckende Halteaufnahme 38, durch die sich das zu haltende Rohr 18 hindurch erstreckt. Mehrere derartige Halteaufnahmen 38 sind in Längserstreckung des leistenförmigen Halteelements der Haltevorrichtung 20 nebeneinanderliegend und querverlaufend angeordnet. Über die Halteaufnahmen 38 halten die Haltevorrichtungen 20 die Rohrleitung 18.

Die Halteaufnahmen sind mittig in dem Halteelement 20 angeordnet, so daß die gehaltene Rohrleitung 18 zur Oberseite des Halteelements den gleichen Abstand wie zu dessen Unterseite aufweist. Das hat den Vorteil, daß ungeachtet der Tatsache, welches der beiden Halteleistenteile 32, 34 auf der Verlegefläche 16 aufliegt, die Rohrleitung 18 in ihren Haltebereichen 26 stets den gleichen Abstand zur Verlegefläche 16 aufweist. Für sämtliche Halteelemente 20 der verlegbaren Rohranordnung 10 werden lediglich zwei Typen von Halteleistenteilen 32, 34 eingesetzt, die wechselweise den unteren und oberen Teil der miteinander direkt verbundenen Halteelemente 20 bilden (Fig.2).

Wie in den Figuren 2 und 3 angedeutet und insbesondere anhand der Figuren 6 und 7 zu erkennen ist, sind die Halteelemente 20 benachbarter Rohranordnungselemente 12 flexibel miteinander verbunden. Zu diesem Zweck ist zwischen den einander zugewandten Enden zweier benachbarter Halteelemente 20 ein Scharnier 40 vorgesehen, über das die Halteelemente 20 miteinander verbunden sind. Bei dem Scharnier 40 handelt es sich um ein Filmscharnier, das ein stegförmiges Verbindungsglied 42 in Form einer Zunge oder dergleichen aufweist. Das Verbindungsglied 42 ist einstückig mit einem der beiden Halteleistenteile 32, 34 verbunden und ragt bis in den Zwischenraum zwischen die beiden Halteleistenteile 32, 34 des benachbarten Halteelements 20 hinein. In diesem Bereich weist das Verbindungsglied 42 Verhakungsvorsprünge 44 auf, die in korrespondierende Verhakungsvertiefungen 46 der Halteleistenteile 32, 34 hineinragen. Bei aufeinanderfolgenden und untereinander verbundenen Halteelementen 20 stehen die jeweiligen Verbindungsglieder 42 der Scharnierverbindungen 40 jeweils wechselweise von der Oberseite und der Unterseite der Halteelemente 20 ab, so daß sich die derart untereinander verbundenen Rohranordnungselemente 12, wie in Figur 1 gezeigt, zick-zack-förmig zusammenlegen und damit stapelförmig übereinander anordnen lassen.

Wie man insbesondere anhand der Figur 2 erkennen kann, wird das Rohr 14 im Bereich seines Übergangs von einem Rohranordnungselement 12 zu einem dazu benachbarten Rohranordnungselement 12 in bestimmter Weise durch die den Rohranordnungselementen 12 zugeordneten Halteelementen 20 gehalten. Wie bereits oben ausgeführt, sind die Halteabschnitte 28 im Bereich der beidseitigen Enden der geradlinigen Rohrleitungsverlaufsabschnitte 22 angeordnet.

Im Bereich eines Übergangs der Rohrleitung 14 von einem Rohranordnungselement 12 zum benachbarten Rohranordnungselement wird die Rohrleitung 14 an dem einen Ende des die beiden Rohranordnungselemente verbindenden geradlinigen Rohrleitungsverlaufsabschnitt von dem Halteelement des einen Rohranordnungselements gehalten, während die Rohrleitung 14 an ihrem gegenüberliegenden Ende dieses geradlinigen Verlaufsabschnitts von dem gegenüberliegenden Halteelement des benachbarten Rohranordnungselements gehalten. Beim Zusammenklappen bzw. Auseinanderklappen zweier auf diese Weise verbundener Rohranordnungselemente 12 erfährt die Rohrleitung in dem die beiden Rohranordnungselemente verbindenden geradlinigen Verlaufsabschnitt eine Torsion. Wegen des Abstandes der beiden in diesem geradlinigen Verlaufsabschnitt angeordneten Haltebereiche führt diese Torsion der Rohrleitung nicht zu einer Beschädigung derselben.

Die gesamte Rohranordnung läßt sich aus (thermoplastischem) Kunststoffmaterial fertigen, so daß sowohl die Rohrleitung 14 als auch die Halteelemente 20 aus Kunststoff bestehen. Bei der Herstellung der Rohranordnung wird die Rohrleitung zweckmäßigerweise erwärmt und im erwärmten Zustand gekrümmt und schlangenlinienförmig in die Halteelemente eingelegt. Infolge der Verbiegung der Rohrleitung im erwärmten Zustand entstehen kaum oder lediglich verminderte mechanische Sapnnungen in den 180° Umlenkungsbereichen, wobei dieser Zustand verminderter mechanischer Spannung durch anschließende Abkühlung eingefroren wird und damit die Rohrleitung selbst (neben den Halteelementen) ihren Schlangenlinienverlauf stabilisiert.

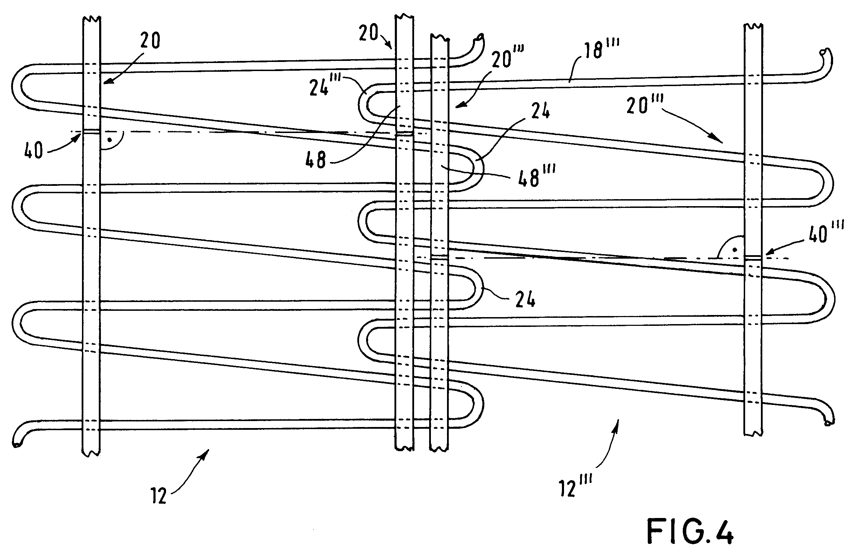

Figur 4 zeigt eine Möglichkeit der Anordnung zweier nebeneinanderliegender Rohranordnungselemente 12, deren halteelemente 20 parallel zueinander verlaufen und nicht miteinander verbunden sind. In Figur 4 sind diese nebeneinanderliegenden Rohranordnungselemente mit 12 und 12''' gekennzeichnet. Wie sich aus Figur 4 ergibt, greifen die benachbarten Rohranordnungselemente 12, 12''' mit ihren einander zugewandten gekrümmten Rohrverlaufsabschnitten 24, 24''' ineinander. Dabei ragen die gekrümmten Abschnitte 24 durch Ausnehmungen 48''' des zugewandten Halteelements 20''' des Rohranordnungselements 12''', während die gekrümmten Verlaufsabschnitte 24''' des Rohrabschnitts 18''' des Rohranordnungselementes 12''' durch die Aussparungen 48 des zugewandten Halteelements 20 des benachbarten Rohranordnungselements 12 sich hindurch erstrecken. Diese Situation ist auch in Figur 5 angedeutet, in der in strichpunktierten Linien die ineinandergreifenden gekrümmten Rohrleitungsverlaufsabschnitte 24, 24''' dargestellt sind.

Wie in den Figuren 6 und 7 verdeutlicht, sind die beiden Halteleistenteile 32, 34 miteinander verclipst. Zu diesem Zweck ist der eine Halteleistenteil 32 mit federelastischen Rastvorsprüngen 50 versehen, die in Durchbrechungen 52 mit Hinterschneidungen 53 des anderen Halteleistenteils 34 rastend zusammenwirken. Hierdurch ergibt sich eine besonders einfache Herstellung der verlegbaren Rohranordnung durch einfaches Verclipsen der die Rohrleitung haltenden Halteleistenteile. Vor dem Verclipsen der beiden Halteleistenteile 32, 34 wird zwischen diese das zungenartige Verbindungsglied 42 eines zu verbindenden Halteelements 20 eines in Rohrverlaufsrichtung betrachtet benachbarten Rohranordnungselements 12 eingeführt. Was die Kopplung zu verbindender Halteelemente 20 betrifft, so wäre auch der Fall denkbar, daß das mit den Verhakungsvorsprüngen 44 versehene Ende eines Verbindungsgliedes 42 zwischen die bereits miteinander verclipsten Halteleistenteile 32, 34 des betreffenden Halteelements 20 eingeschoben wird und sich zwischen diesen rastend verhakt.

In den Figuren 8 bis 10 ist eine Alternative für eine flexible Scharnierverbindung zwischen zwei identischen Halteelementen 54 gezeigt. Bei dieser Alternativen ist eines der beiden Enden eines Halteelementes 54 (soweit möglich, sind in den Figuren 8 bis 10 die gleichen Bezugszeichen wie in den Figuren 1 bis 7 vergeben) mit einem über das Ende überstehenden Verbindungsglied 56 versehen, das an seinem Ende eine zylindrische Verdickung 58 aufweist. Diese zylindrische Verdickung 58 wird in eine seitlich offene, im wesentlichen C-förmige Ausnehmung 60 in dem anderen zugewandten Ende des benachbarten zu verbindenden Halteelements 54 eingeführt, indem die beiden Halteelemente 54 nebeneinanderliegend in quer zu ihrer Erstreckung verlaufenden Richtung zusammengefügt werden (siehe Fig. 9). Im verbundenen Zustand stellt sich dann die Situation gemäß Figur 10 ein.

Aus den Figuren 8 bis 10 ergibt sich aber auch noch eine weitere alternative Ausbildung der Halteelemente 20, nämlich in bezug auf die Rohrleitungshalterungen. Gemäß Figuren 8 bis 10 bestehen diese aus querverlaufenden Aufnahmevertiefungen 62, die sämtlich zu einer Seite des Halteelements 54 (je nach Anordnung des Halteelementes 54 ist dies die Ober- oder die Unterseite) offen sind. In diese Aufnahmevertiefungen 62 wird die Rohrleitung 18 eingedrückt, wobei eine elastische Verengung 64 in der in der Ober- bzw. Unterseite des Halteelements 54 liegenden Öffnung 66 für die Sicherung gegen unbeabsichtigtes Herausgleiten der Rohrleitung 18 aus einer Aufnahmevertiefung 62 sorgt. Die Tiefe der Aufnahmevertiefungen 62 ist in Abhängigkeit von dem Durchmesser der Rohrleitung 18 derart gewählt, daß die in einer Aufnahmevertiefung 62 angeordnete Rohrleitung 18 zur Ober- und Unterseite des Halteelementes 54 den gleichen Abstand aufweist. Damit weist die Rohrleitung 18 in ihren Haltebereichen stets den gleichen Abstand zur Verlegefläche auf, und zwar ungeachtet der Ausrichtung der Halteelemente 54, also ungeachtet der Tatsache, daß diese mit ihren Aufnahmevertiefungsöffnungen 66 zur Verlegefläche weisen oder entgegengesetzt dazu.

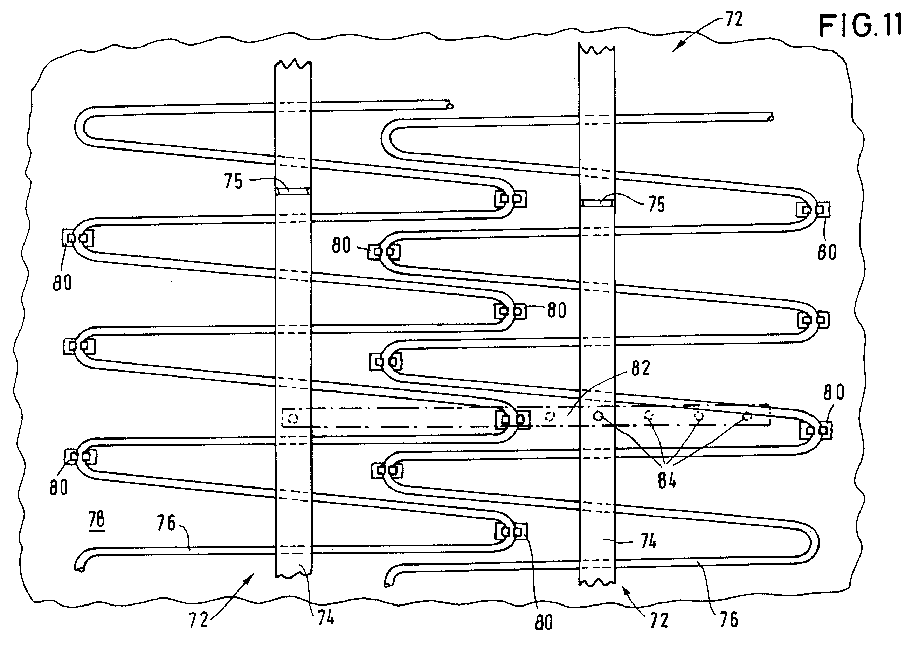

Schließlich sei in Figur 11 auf eine Variante eines Rohranordnungselementes 72 eingegangen. Dieses Rohranordnungselement 72 ist mit lediglich einer leistenförmigen Haltevorrichtung 74 versehen, die die in diesem Fall ebenfalls schlangenlinienförmig bzw. zick-zack-förmig verlaufende Rohrleitung 76 in deren geradlinigen Verlaufsabschnitten umschließt und hält. Je nach der Länge der geradlinigen Verlaufsabschnitte steht die schlangenlinienförmige Rohranordnung mehr oder weniger weit zu beiden Seiten über die Haltevorrichtung 74 über. Die Haltevorrichtung 74 von in Rohrleitungsverlauf betrachtet aufeinanderfolgenden Rohranordnungselementen 72 sind über flexible Verbindungen 75 (Scharniere, Filmscharniere o.dgl.) miteinander schwenkbar verbunden. Um auch in den am weitesten von der Haltevorrichtung 74 entfernt angeordneten gekrümmten Verlaufsabschnitten einen definierten Abstand zur Verlegefläche 78 zu garantieren, ist die Rohrleitung 76 in diesen gekrümmten Verlaufsabschnitten mit bei 80 angedeuteten Abstandshaltern versehen.

Wie aus Figur 11 ersichtlich, greifen die Haltevorrichtungen 74 zweier in Rohrleitungsverlaufsrichtung betrachtet hintereinanderliegender Rohranordnungselemente 72 in zwei in Rohrverlaufsrichtung betrachtet aufeinanderfolgenden geradlinigen Verlaufsabschnitten an. Beim Zusammenklappen bzw. Ausklappen der auf diese Weise miteinander gekoppelten aufeinanderfolgenden Rohranordnungselementen 72, die über die durchgehende Rohrleitung 76 und über die flexibel miteinander verbundenen Haltevorrichtung 74 miteinander gekoppelt sind, tordiert die Rohrleitung 76 innerhalb ihres Übergangsbereichs von einem Rohranordnungselement 72 zum benachbarten Rohranordnungselement 72. Dieser Übergangsbereich ist definiert durch zwei aufeinanderfolgende geradlinige Abschnitte (und zwar je zur Hälfte) und den diese verbindenden gekrümmten Verlaufsabschnitt.

Figur 11 zeigt ferner eine Verlegung benachbarter Rohranordnungselemente 72, deren Haltevorrichtungen 74 nicht miteinander gekoppelt sind. Wie bei der Verlegungsart gemäß Figur 4, greifen auch gemäß Figur 11 die einander zugewandten gekrümmten Verlaufsabschnitte der Rohrleitung 76 ineinander. Eine die beiden parallel zueinander verlaufenden Haltevorrichtungen 74 miteinander verbindende Abstandsvorrichtung 82 in Form einer Abstandsleiste bestimmt den seitlichen Abstand der beiden Haltevorrichtungen 74 oder, anders ausgedrückt, den Grad des Ineinandergreifens der Rohrleitungen 76 beider Rohranordnungselemente 72. Mittels der Abstandsvorrichtung 82 lassen sich über die gesamte Verlegefläche 78 gleichmäßig voneinander beabstandete Rohranordnungselemente 72 verlegen. Vorzugsweise ist die Abstandsvorrichtung 82 mit mehreren Verbindungsmöglichkeiten 84 zum Verbinden zweier paralleler Haltevorrichtungen 74 in unterschiedlichen Abständen versehen.

## Patentansprüche

1. Verlegbare Rohranordnung zum Verlegen auf und/oder an einer Verlegefläche, insbesondere für eine Fußboden-, Wand- und/oder Deckenheizung und/oder -kühlung, mit
- mindestens einem Rohranordnungselement (12;72), das aufweist
- eine in einem Flächenbereich verlaufende Rohrleitung (18), die mindestens einen geradlinigen Verlaufsabschnitt (22) und/oder einen gekrümmten Verlaufsabschnitt (24) aufweist, und
mindestens eine Haltevorrichtung (20;74) zum Halten der Rohrleitung (18) unter Aufrechterhaltung des Rohrleitungsverlaufs innerhalb des Flächenbereichs, wobei die mindestens eine Haltevorrichtung (20) in mindestens einem Haltebereich (26) der Rohrleitung (18) mit dieser in Halteeingriff steht.

2. Rohranordnung nach Anspruch 1, dadurch gekennzeichnet, daß sich die Rohrleitung (18) schlangenlinienförmig mit geradlinigen Verlaufsabschnitten (22) und mit zwischen jeweils zwei geradlinigen Verlaufsabschnitten (22) angeordneten, abwechselnd gegensinnig gekrümmten Verlaufsabschnitten (24) erstreckt, in denen die Rohrleitung (18) um etwa 180°, vorzugsweise um 140° bis 180° und insbesondere um 140° bis 170° gebogen ist, und daß die mindestens eine Haltevorrichtung (20) die Rohrleitung (18) in geradlinigen Verlaufsabschnitten (22) hält.

3. Rohranordnung nach Anspruch 1 oder 2, dadurch gekennzeichnet, daß jede Haltevorrichtung (20;74) mindestens ein im wesentlichen biegesteifes Halteelement umfaßt.

4. Rohranordnung nach einem der Ansprüche 1 bis 3, dadurch gekennzeichnet, daß die im wesentlichen starren und geradlinig verlaufenden Haltevorrichtungen (20; 74) zweier benachbarter Rohranordnungselemente (12; 72) flexibel miteinander verbunden oder flexibel miteinander verbindbar sind.

5. Rohranordnung nach Anspruch 4, dadurch gekennzeichnet, daß miteinander verbundene Haltevorrichtungen (20; 74) miteinander gekoppelte Halteelemente aufweisen, die um eine im wesentlichen in der Ebene des Rohrleitungsverlaufs oder parallel dazu liegenden Schwenkachse schwenkbar sind.

6. Rohranordnung nach Anspruch 4 oder 5, dadurch gekennzeichnet, daß die Halteelemente über eine Scharniervorrichtung (40), insbesondere eine Filmscharniervorrichtung, miteinander verbunden sind.

7. Rohranordnung nach einem der Ansprüche 4 bis 6, dadurch gekennzeichnet, daß die Rohrleitung (18) von zwei flexibel miteinander verbundenen Haltevorrichtungen unter anderem in zwei in Richtung des Rohrleitungsverlaufs betrachtet aufeinanderfolgenden Haltebereichen (26) gehalten ist, die in Richtung des Rohrleitungsverlaufs betrachtet derart weit voneinander beabstandet sind, daß die Rohrleitung (18) beim Bewegen der Haltevorrichtungen (20; 74) im Bereich zwischen den beiden Haltebereichen (26) beschädigungsfrei tordierbar oder um eine andere als die Längsachse der Rohrleitung (18) biegbar ist.

8. Rohranordnung nach einem der Ansprüche 1 bis 6, dadurch gekennzeichnet, daß pro Rohranordnungselement (12) zwei Haltevorrichtungen (20) vorgesehen sind, die die Rohrleitung (18) pro Rohranordnungselement (12) in innerhalb geradliniger Verlaufsabschnitte (22) angeordneten Haltebereichen (26) halten.

9. Rohranordnung nach Anspruch 8, dadurch gekennzeichnet, daß die Haltevorrichtungen zweier in Richtung des Rohrleitungsverlaufs betrachtet aufeinanderfolgende Rohranordnungselemente (12) paarweise flexibel miteinander verbunden sind und daß zwei in Richtung des Rohrleitungsverlaufs betrachtet aufeinanderfolgende Haltebereiche (26), in denen die Rohrleitung (18) von nicht miteinander verbundenen Haltevorrichtungen (20) unterschiedlicher Rohranordnungselemente (12) gehalten ist, derart weit voneinander beabstandet sind, daß die Rohrleitung beim Bewegen der Haltevorrichtungen (20) im Bereich zwischen den beiden Haltebereichen (26) beschädigungsfrei tordierbar oder um eine andere als die Längsachse der Rohrleitung (18) biegbar ist.

10. Rohranordnung nach Anspruch 9, dadurch gekennzeichnet, daß sich die beiden aufeinanderfolgenden und unterschiedlichen Rohranordnungselementen zugeordneten Haltebereiche (26) innerhalb eines geradlinigen Abschnitts (22) des Rohrleitungsverlaufs befinden, wobei der eine Haltebereich (26) im Angrenzungsabschnitt (28) zu dem einen an den geradlinigen Verlaufsabschnitt (22) angrenzenden gekrümmten Abschnitt (24) und der andere Haltebereich (26) im Angrenzungsabschnitt (28) zum anderen an den geradlinigen Verlaufsabschnitt (22) angrenzenden gekrümmten Abschnitt (24) angeordnet ist.

11. Rohranordnung nach einem der Ansprüche 1 bis 10, dadurch gekennzeichnet, daß die Rohrleitung (76) außerhalb ihrer Haltebereiche mit Abstandshaltern (80) zum Beibehalten eines insbesondere gleichbleibenden Abstandes der verlegten Rohrleitung zur Verlegefläche (78) versehen ist.

12. Rohranordnung nach einem der Ansprüche 5 bis 11, dadurch gekennzeichnet, daß die Halteelemente der Haltevorrichtungen (20) benachbarter Rohranordnungselemente (12) lösbar miteinander verbunden oder verbindbar sind.

13. Rohranordnung nach einem der Ansprüche 1 bis 12, dadurch gekennzeichnet, daß jedes Halteelement zu einer Seite offene, querverlaufende Halteausnehmungen (62) aufweist, durch die sich die Rohrleitung (18) hindurch erstreckt.

14. Rohranordnung nach einem der Ansprüche 1 bis 12, dadurch gekennzeichnet, daß jedes Halteelement zweiteilig ausgebildet ist, wobei jeder Halteelementteil (32,34) einander gegenüberliegende Ausnehmungen (36) aufweist und jeweils zwei gegenüberliegende Ausnehmungen (36) eine querverlaufende, die Rohrleitung (18) umschließende Haltedurchbrechung (38) bilden.

15. Rohranordnung nach Anspruch 14, dadurch gekennzeichnet, daß der eine Halteelementteil (32; 34) ein in Längserstreckung des Halteelements überstehendes Verbindungsglied (42; 56) zum flexiblen Verbinden mit einem benachbarten Halteelement aufweist.

16. Rohranordnung nach Anspruch 15, dadurch gekennzeichnet, daß das Verbindungsglied (42; 56) flexibel ist oder mit dem benachbarten Halteelement verhakbar ist oder daß das Verbindungsglied (42) zwischen den beiden Halteelementteilen (32,34) eines benachbarten Halteelements verankert aufgenommen ist.

17. Rohranordnung nach Anspruch 16, dadurch gekennzeichnet, daß das Verbindungsglied (42) an seinem zwischen die Halteelementteile (32,34) eines benachbarten Halteelementes hineinragenden Ende mit mindestens einem Verriegelungsvorsprung (44) versehen ist, der in eine Verriegelungsvertiefung (46) in einer der beiden Halteelementteile (32,34) eingetaucht ist.

18. Rohranordnung nach einem der Ansprüche 1 bis 17, dadurch gekennzeichnet, daß die Haltevorrichtung (20) zwischen jeweils zwei Paaren von in Erstreckung der Haltevorrichtung (20) aufeinanderfolgenden Halteaufnahmen (38) eine querverlaufende Aussparung (48) zur Aufnahme eines gekrümmten Verlaufsabschnitts (24) eines benachbarten Rohranordnungselements (12) aufweist.
